# EUROPEAN PATENT APPLICATION

(11) **EP 4 740 745 A1**
(43) Date of publication of application: **13.05.2026**
(21) Application number: 24839669.9
(22) Date of filing: 05.07.2024
(51) Int. Cl.: A23L 2/60, A23L 2/38, A23L 2/52, A23L 2/54

(54) **BEVERAGE CONTAINING ERYTHRITOL, GLUCONIC ACID, AND AMINO ACID**

(30) Priority: 07.07.2023 JP 2023112491
(71) Applicant: Suntory Holdings Limited, Osaka-shi, Osaka 530-8203 (JP)
(72) Inventor: YAMASHITA Jumpei, Kawasaki-shi, Kanagawa 211-0067 (JP); SOGUCHI Akira, Kawasaki-shi, Kanagawa 211-0067 (JP); OHKURI Tadahiro, Kawasaki-shi, Kanagawa 211-0067 (JP); LU Lucy, Auckland, 2104 (NZ)
(74) Representative: Grünecker Patent- und Rechtsanwälte PartG mbB
(86) International application number: PCT/JP2024/024380
(87) International publication number: WO 2025/013777

(57) **Abstract**

The present invention provides a beverage containing an alternative sweetener in which the taste quality unique to alternative sweeteners is reduced or improved. One embodiment of the present invention provides a beverage containing: erythritol; gluconic acid or a gluconic acid compound; and one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine.

## Description

### Technical Field

The present invention relates to a beverage containing erythritol, gluconic acid or a gluconic acid compound, and one or more predetermined amino acids, and a method for producing the beverage. The present invention further relates to a method for improving taste quality of a beverage, the method including adding gluconic acid or a gluconic acid compound and one or more amino acids to a beverage containing erythritol.

### Background Art

In recent years, development of foods and beverages using an alternative sweetener has been advanced against the backdrop of the increase in health awareness and the introduction of a sugar tax being considered in various countries. On the other hand, alternative sweeteners often have unique flavor characteristics different from sugar, and the presence of such unique flavor characteristic may be a concern in using the alternative sweeteners. Therefore, studies have been made to reduce and improve the unique flavor characteristic of alternative sweeteners.

For example, JP 6668607 B (Patent Document 1) discloses, as a technique for improving the quality of sweetness, sharpness, lingering sweetness, or bitterness of one or more sweeteners selected from sucralose, acesulfame potassium, and erythritol, blending one or more sweetness-improving substances selected from a Japanese pepper extract, a ginger extract, a laurel extract, a nutmeg extract, and a Sichuan pepper extract in a beverage containing one or more of these sweeteners. In addition, JP 6744858 B (Patent Document 2) discloses, as a taste quality improving technique for suppressing bitterness and improving an aftertaste in a sweetener containing erythritol as a main component, the use of a trace amount of D-psicose of 0.27 to 7 parts by mass per 100 parts by mass of erythritol in combination in a sweetener composition containing erythritol as a main component.

### Citation List

### Patent Document

Patent Document 1: JP 6668607 B
Patent Document 2: JP 6744858 B

### Summary of Invention

### Technical Problem

Under the circumstances described above, there is a need for the development of a beverage containing an alternative sweetener in which the taste quality unique to the alternative sweetener is reduced and/or improved.

### Solution to Problem

The present inventors have conducted studies and found that at least one flavor characteristic selected from the group consisting of a miscellaneous taste, a low body feel, and a lingering sweetness derived from erythritol is improved by including erythritol, gluconic acid or a gluconic acid compound, and one or more predetermined amino acids in a beverage. The present invention is based on such a finding.

The present invention includes, for example, inventions in accordance with the following aspects.
[1] A beverage, containing:
   erythritol;
   gluconic acid or a gluconic acid compound; and
   one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine.
[2] The beverage according to [1], containing one or more amino acids selected from the group consisting of glycine, alanine, valine, isoleucine, leucine, serine, threonine, glutamine, asparagine, arginine, lysine, and histidine.
[3] The beverage according to [1] or [2], wherein a content of the one or more amino acids is from 10 to 5000 ppm by mass.
[4] The beverage according to any of [1] to [3], wherein a content of the erythritol is from 100 to 25000 ppm by mass.
[5] The beverage according to any of [1] to [4], wherein a content of the gluconic acid or the gluconic acid compound is, in terms of gluconic acid, from 30 to 20000 ppm by mass.
[6] The beverage according to any of [1] to [5], wherein the gluconic acid compound includes one or more selected from the group consisting of sodium gluconate and potassium gluconate.
[7] The beverage according to any of [1] to [6], wherein the beverage comprises from 1 to 2000 ppm by mass of sodium.
[8] The beverage according to any of [1] to [7], wherein the beverage comprises from 600 to 1800 ppm by mass of sodium.
[9] The beverage according to any of [1] to [8], further containing a high-intensity sweetener.
[10] The beverage according to [9], wherein the high-intensity sweetener contains at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviolmonoside, steviolbioside, stevioside, luo han guo extract, mogroside V, thaumatin, brazzein, licorice extract, saccharin, neotame, aspartame, acesulfame K, sucralose, and a combination thereof.
[11] The beverage according to any of [1] to [10], wherein the beverage is a carbonated beverage or an energy drink.
[12] The beverage according to any of [1] to [11], having an energy of 30 Kcal/100 ml or less.
[13] The beverage according to any of [1] to [12], further containing citric acid.
[14] The beverage according to any of [1] to [13], wherein the beverage is a packaged beverage.
[15] A method for improving taste quality of a beverage, the method including adding, to a beverage containing erythritol: gluconic acid or a gluconic acid compound; and one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine.

### Advantageous Effects of Invention

According to an aspect of the present invention, a beverage, in which at least one flavor characteristic selected from the group consisting of a miscellaneous taste, a low body feel, and a lingering sweetness derived from erythritol is improved, can be provided. According to another aspect of the present invention, a method for improving at least one flavor characteristic selected from the group consisting of a miscellaneous taste, a low body feel, and a lingering sweetness derived from erythritol can be provided.

### Description of Embodiments

Hereinafter, the present invention will be described in detail. The following embodiments are examples for explaining the present invention and are not intended to limit the present invention to these embodiments only. The present invention can be implemented in various embodiments as long as the gist of the present invention is not deviated.

All documents, patent application publications, patent publications, and other patent documents cited in the present specification are incorporated herein by reference. In addition, the present specification incorporates, by this reference, the contents described in the specification of Japanese patent application (Patent Application No. 2023-112491), filed on July 7, 2023, which serves as a basis for the priority claim by the present application.

### 1. Beverage

The present invention provides, as one aspect, a beverage containing erythritol, gluconic acid or a gluconic acid compound, and one or more predetermined amino acids (hereinafter, also referred to as "the beverage of the present invention"). An aspect of the present invention provides a beverage containing: erythritol; gluconic acid or a gluconic acid compound; and one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine.

### Beverage

In the present specification, the term "beverage" means a drinkable liquid or a liquid food and includes a food partially in a gel or sol state. The beverage may be either an alcoholic beverage or a non-alcoholic beverage. Examples of the non-alcoholic beverage include, but are not limited to, non-alcoholic beers, malt beverages, lactobacillus beverages, cocoa, sports drinks, energy drinks, tea-based beverages, coffee beverages, jelly drinks, carbonated beverages, functional beverages, fruit juice beverages, vegetable-based beverages, dairy beverages, soy milk beverages, and flavored waters. A beverage according to a preferred aspect of the present invention is a carbonated beverage or an energy drink.

A beverage according to some aspects of the present invention contains erythritol, gluconic acid or a gluconic acid compound, and one or more predetermined amino acids, and as shown in Examples of the present specification, unexpectedly, the beverage can improve at least one flavor characteristic selected from the group consisting of a miscellaneous taste derived from erythritol, a reduced body feel due to sugar reduction, and a lingering sweetness derived from an artificial sweetener or a non-caloric sweetener used as a substitute for sugar reduction. As used herein, the term "miscellaneous taste" means a peculiar miscellaneous taste perceived when a beverage containing erythritol is drunk, the term "reduced body feel" means a thick feeling that is impaired in a sugar-reduced beverage and is perceived when a beverage containing sugar is drunk, and the term "lingering sweetness" means a sweet feeling remaining in the mouth, which is perceived when a beverage containing an artificial sweetener or a non-caloric sweetener is drunk.

### Erythritol

The beverage according to an aspect of the present invention contains erythritol. Erythritol is a natural sweetener classified as a sugar alcohol and has about 70% of the sweetness of sucrose. Erythritol is known as a low- or zero-calorie sweetener due to minimal digestion in the human body and subsequent excretion in urine.

In the beverage according to some aspects of the present invention, the content of erythritol is from 100 to 25000 ppm by mass. Preferably, the content of erythritol may be from 100 to 20000 ppm by mass, from 100 to 17500 ppm by mass, from 100 to 15000 ppm by mass, from 100 to 12500 ppm by mass, from 100 to 10000 ppm by mass, from 100 to 9000 ppm by mass, from 100 to 8500 ppm by mass, from 100 to 8000 ppm by mass, from 100 to 7500 ppm by mass, from 100 to 7000 ppm by mass, from 500 to 25000 ppm by mass, from 500 to 20000 ppm by mass, from 500 to 17500 ppm by mass, from 500 to 15000 ppm by mass, from 500 to 12500 ppm by mass, from 500 to 10000 ppm by mass, from 500 to 9000 ppm by mass, from 500 to 8500 ppm by mass, from 500 to 8000 ppm by mass, from 500 to 7500 ppm by mass, from 500 to 7000 ppm by mass, from 1000 to 25000 ppm by mass, from 1000 to 20000 ppm by mass, from 1000 to 17500 ppm by mass, from 1000 to 15000 ppm by mass, from 1000 to 12500 ppm by mass, from 1000 to 10000 ppm by mass, from 1000 to 9000 ppm by mass, from 1000 to 8500 ppm by mass, from 1000 to 8000 ppm by mass, from 1000 to 7500 ppm by mass, from 1000 to 7000 ppm by mass, from 1500 to 25000 ppm by mass, from 1500 to 20000 ppm by mass, from 1500 to 17500 ppm by mass, from 1500 to 15000 ppm by mass, from 1500 to 12500 ppm by mass, from 1500 to 10000 ppm by mass, from 1500 to 9000 ppm by mass, from 1500 to 8500 ppm by mass, from 1500 to 8000 ppm by mass, from 1500 to 7500 ppm by mass, from 1500 to 7000 ppm by mass, from 2000 to 25000 ppm by mass, from 2000 to 20000 ppm by mass, from 2000 to 17500 ppm by mass, from 2000 to 15000 ppm by mass, from 2000 to 12500 ppm by mass, from 2000 to 10000 ppm by mass, from 2000 to 9000 ppm by mass, from 2000 to 8500 ppm by mass, from 2000 to 8000 ppm by mass, from 2000 to 7500 ppm by mass, from 2000 to 7000 ppm by mass, from 3000 to 25000 ppm by mass, from 3000 to 20000 ppm by mass, from 3000 to 17500 ppm by mass, from 3000 to 15000 ppm by mass, from 3000 to 12500 ppm by mass, from 3000 to 10000 ppm by mass, from 3000 to 9000 ppm by mass, from 3000 to 8500 ppm by mass, from 3000 to 8000 ppm by mass, from 3000 to 7500 ppm by mass, from 3000 to 7000 ppm by mass, from 4000 to 25000 ppm by mass, from 4000 to 20000 ppm by mass, from 4000 to 17500 ppm by mass, from 4000 to 15000 ppm by mass, from 4000 to 12500 ppm by mass, from 4000 to 10000 ppm by mass, from 4000 to 9000 ppm by mass, from 4000 to 8500 ppm by mass, from 4000 to 8000 ppm by mass, from 4000 to 7500 ppm by mass, from 4000 to 7000 ppm by mass, from 5000 to 25000 ppm by mass, from 5000 to 20000 ppm by mass, from 5000 to 17500 ppm by mass, from 5000 to 15000 ppm by mass, from 5000 to 12500 ppm by mass, from 5000 to 10000 ppm by mass, from 5000 to 9000 ppm by mass, from 5000 to 8500 ppm by mass, from 5000 to 8000 ppm by mass, from 5000 to 7500 ppm by mass, from 5000 to 7000 ppm by mass, from 6000 to 25000 ppm by mass, from 6000 to 20000 ppm by mass, from 6000 to 17500 ppm by mass, from 6000 to 15000 ppm by mass, from 6000 to 12500 ppm by mass, from 6000 to 10000 ppm by mass, from 6000 to 9000 ppm by mass, from 6000 to 8500 ppm by mass, from 6000 to 8000 ppm by mass, from 6000 to 7500 ppm by mass, or from 6000 to 7000 ppm by mass. More preferably, the content of erythritol is from 5000 to 10000 ppm by mass, or from 6000 to 8000 ppm by mass. By adding erythritol in such an amount to the beverage, it is possible to increase the feeling of satisfaction at the time of drinking. The content of erythritol in the beverage can be measured by a high-performance liquid chromatography (HPLC). Alternatively, in a case where the blending amount thereof is known, a value calculated from the blending amount may be used.

### Gluconic Acid or Gluconic Acid Compound

The beverage according to an aspect of the present invention contains gluconic acid or a gluconic acid compound. In the present specification, the gluconic acid compound is a compound derived from gluconic acid, and examples thereof include a gluconate, a gluconate ester, and glucono-delta-lactone. Examples of the gluconate include sodium gluconate, potassium gluconate, zinc gluconate, calcium gluconate, ferrous gluconate, and copper gluconate. Preferably, the gluconic acid compound contains one or more selected from the group consisting of sodium gluconate and potassium gluconate. Sodium gluconate is a sodium salt of gluconic acid, and potassium gluconate is a potassium salt of gluconic acid, both of which are available as food additives. The gluconic acid is preferably D-gluconic acid.

The content of the gluconic acid or gluconic acid compound is not particularly limited, but is preferably from 30 to 20000 ppm by mass in terms of gluconic acid. The content in terms of gluconic acid may be from 30 to 17000 ppm by mass, from 30 to 16000 ppm by mass, from 30 to 15000 ppm by mass, from 30 to 10000 ppm by mass, from 30 to 8000 ppm by mass, from 30 to 6000 ppm by mass, from 30 to 4000 ppm by mass, from 30 to 2000 ppm by mass, from 50 to 20000 ppm by mass, from 50 to 17000 ppm by mass, from 50 to 15000 ppm by mass, from 50 to 10000 ppm by mass, from 50 to 8000 ppm by mass, from 50 to 6000 ppm by mass, from 50 to 4000 ppm by mass, from 50 to 2000 ppm by mass, from 100 to 20000 ppm by mass, from 100 to 17000 ppm by mass, from 100 to 15000 ppm by mass, from 100 to 10000 ppm by mass, from 100 to 8000 ppm by mass, from 100 to 6000 ppm by mass, from 100 to 4000 ppm by mass, from 100 to 2000 ppm by mass, from 150 to 20000 ppm by mass, from 150 to 17000 ppm by mass, from 150 to 15000 ppm by mass, from 150 to 10000 ppm by mass, from 150 to 8000 ppm by mass, from 150 to 6000 ppm by mass, from 150 to 4000 ppm by mass, from 150 to 2000 ppm by mass, from 170 to 20000 ppm by mass, from 170 to 17000 ppm by mass, from 170 to 16000 ppm by mass, from 170 to 15000 ppm by mass, from 170 to 10000 ppm by mass, from 170 to 8000 ppm by mass, from 170 to 6000 ppm by mass, from 170 to 4000 ppm by mass, from 170 to 2000 ppm by mass, from 200 to 20000 ppm by mass, from 200 to 17000 ppm by mass, from 200 to 15000 ppm by mass, from 200 to 10000 ppm by mass, from 200 to 8000 ppm by mass, from 200 to 6000 ppm by mass, from 200 to 4000 ppm by mass, from 200 to 2000 ppm by mass, from 500 to 20000 ppm by mass, from 500 to 17000 ppm by mass, from 500 to 15000 ppm by mass, from 500 to 10000 ppm by mass, from 500 to 8000 ppm by mass, from 500 to 6000 ppm by mass, from 500 to 4000 ppm by mass, from 500 to 2000 ppm by mass, from 1000 to 20000 ppm by mass, from 1000 to 17000 ppm by mass, from 1000 to 15000 ppm by mass, from 1000 to 10000 ppm by mass, from 1000 to 8000 ppm by mass, from 1000 to 6000 ppm by mass, from 1000 to 4000 ppm by mass, from 1000 to 2000 ppm by mass, from 1500 to 20000 ppm by mass, from 1500 to 17000 ppm by mass, from 1500 to 15000 ppm by mass, from 1500 to 10000 ppm by mass, from 1500 to 8000 ppm by mass, from 1500 to 6000 ppm by mass, from 1500 to 4000 ppm by mass, or from 1500 to 2000 ppm by mass. In the present specification, the term "in terms of gluconic acid" means the amount of gluconic acid contained in a beverage, which is the total amount of gluconic acid and a gluconic acid compound. Without wishing to be bound by theory, it is believed that the gluconic acid compound (e.g., a gluconate and glucono-delta-lactone) dissociates or changes to gluconic acid in an aqueous solution, and thus adjusting the concentration in terms of gluconic acid in the beverage can adjust the effect of gluconic acid or a gluconic acid compound on the taste quality of the beverage. By adding a predetermined amount of gluconic acid or a gluconic acid compound in such an amount and an amino acid described later to a beverage containing erythritol, it is possible to improve at least one flavor characteristic selected from the group consisting of a miscellaneous taste, a low body feel, and lingering sweetness derived from erythritol. The content in terms of gluconic acid can be measured by, for example, an enzyme method or ion chromatography. Alternatively, in a case where the blending amount thereof is known, a value calculated from the blending amount may be used.

### Sodium

The beverage according to some aspects of the present invention contains from 1 to 2000 ppm by mass of sodium. This means that the content of sodium atoms is from 1 to 2000 ppm by mass. The content of sodium may be, depending on the embodiment, from 10 to 2000 ppm by mass, from 50 to 2000 ppm by mass, from 100 to 2000 ppm by mass, from 150 to 2000 ppm by mass, from 300 to 2000 ppm by mass, from 400 to 2000 ppm by mass, from 500 to 2000 ppm by mass, from 600 to 2000 ppm by mass, from 700 to 2000 ppm by mass, from 800 to 2000 ppm by mass, from 900 to 2000 ppm by mass, from 1000 to 2000 ppm by mass, from 1100 to 2000 ppm by mass, from 10 to 1800 ppm by mass, from 50 to 1800 ppm by mass, from 100 to 1800 ppm by mass, from 150 to 1800 ppm by mass, from 300 to 1800 ppm by mass, from 400 to 1800 ppm by mass, from 500 to 1800 ppm by mass, from 600 to 1800 ppm by mass, from 700 to 1800 ppm by mass, from 800 to 1800 ppm by mass, from 900 to 1800 ppm by mass, from 1000 to 1800 ppm by mass, from 1100 to 1800 ppm by mass, from 10 to 1500 ppm by mass, from 50 to 1500 ppm by mass, from 100 to 1500 ppm by mass, from 150 to 1500 ppm by mass, from 300 to 1500 ppm by mass, from 400 to 1500 ppm by mass, from 500 to 1500 ppm by mass, from 600 to 1500 ppm by mass, from 700 to 1500 ppm by mass, from 800 to 1500 ppm by mass, from 900 to 1500 ppm by mass, from 1000 to 1500 ppm by mass, from 1100 to 1500 ppm by mass, from 10 to 1000 ppm by mass, from 50 to 1000 ppm by mass, from 100 to 1000 ppm by mass, from 150 to 1000 ppm by mass, from 300 to 1000 ppm by mass, from 400 to 1000 ppm by mass, from 500 to 1000 ppm by mass, from 600 to 1000 ppm by mass, from 700 to 1000 ppm by mass, from 800 to 1000 ppm by mass, from 10 to 800 ppm by mass, from 50 to 800 ppm by mass, from 100 to 800 ppm by mass, from 150 to 800 ppm by mass, from 300 to 800 ppm by mass, from 400 to 800 ppm by mass, from 500 to 800 ppm by mass, from 600 to 800 ppm by mass, from 10 to 500 ppm by mass, from 50 to 500 ppm by mass, from 100 to 500 ppm by mass, from 150 to 500 ppm by mass, from 300 to 500 ppm by mass, from 10 to 300 ppm by mass, from 50 to 300 ppm by mass, from 100 to 300 ppm by mass, or from 150 to 300 ppm by mass. A beverage according to a preferred aspect of the present invention contains from 600 to 1500 ppm by mass of sodium. Having the sodium content of such an amount is preferable because the sweetness of the beverage can be increased. In the present specification, the content of sodium in the beverage can be measured by atomic absorption spectrometry.

In some aspects of the present invention, the content of sodium is derived from one or more sodium salts selected from the group consisting of organic acid salts such as sodium gluconate, sodium malate, sodium tartrate, monosodium citrate, disodium citrate, trisodium citrate, sodium lactate, sodium alginate, and sodium ascorbate, inorganic salts such as sodium chloride, sodium sulfate, sodium phosphate, sodium carbonate, sodium disulfide, sodium bicarbonate, and sodium hydroxide, sodium arginate, sodium glutamate, sodium aspartate, and sodium caseinate. In a preferred embodiment of the present invention, the content of sodium is derived from one or more sodium salts selected from the group consisting of sodium gluconate, sodium malate, sodium tartrate, sodium lactate, sodium alginate, sodium ascorbate, sodium chloride, sodium sulfate, sodium phosphate, sodium carbonate, sodium disulfide, sodium bicarbonate, sodium hydroxide, sodium arginate, sodium glutamate, sodium aspartate, and sodium caseinate.

### Amino Acid

The beverage of some aspects of the present invention contains one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine. The beverage preferably contains one or more amino acids selected from the group consisting of glycine, alanine, valine, isoleucine, leucine, serine, threonine, glutamine, asparagine, arginine, lysine, and histidine. The amino acid used in the present invention may be D-form, L-form, or racemic (also referred to herein as DL amino acid) composed of D-form and L-form.

The content of the one or more amino acids is not particularly limited, but may be more than 0 ppm by mass and 5000 ppm by mass or less. When two or more amino acids are contained, the content is the total amount of the two or more amino acids. The content of amino acid may be, depending on the embodiment, 10 to 5000 ppm by mass, 30 to 5000 ppm by mass, more than 30 ppm by mass and 5000 ppm by mass or less, 50 to 5000 ppm by mass, 100 to 5000 ppm by mass, 150 to 5000 ppm by mass, 200 to 5000 ppm by mass, 250 to 5000 ppm by mass, 300 to 5000 ppm by mass, 350 to 5000 ppm by mass, 400 to 5000 ppm by mass, 10 to 4000 ppm by mass, 30 to 4000 ppm by mass, more than 30 ppm by mass and 4000 ppm by mass or less, 40 to 4000 ppm by mass, 50 to 4000 ppm by mass, 100 to 4000 ppm by mass, 150 to 4000 ppm by mass, 200 to 4000 ppm by mass, 250 to 4000 ppm by mass, 300 to 4000 ppm by mass, 350 to 4000 ppm by mass, 400 to 4000 ppm by mass, 10 to 3000 ppm by mass, 30 to 3000 ppm by mass, more than 30 ppm by mass and 3000 ppm by mass or less, 50 to 3000 ppm by mass, 100 to 3000 ppm by mass, 150 to 3000 ppm by mass, 200 to 3000 ppm by mass, 250 to 3000 ppm by mass, 300 to 3000 ppm by mass, 350 to 3000 ppm by mass, 400 to 3000 ppm by mass, 10 to 2000 ppm by mass, 30 to 2000 ppm by mass, more than 30 ppm by mass and 2000 ppm by mass or less, 50 to 2000 ppm by mass, 100 to 2000 ppm by mass, 150 to 2000 ppm by mass, 200 to 2000 ppm by mass, 250 to 2000 ppm by mass, 300 to 2000 ppm by mass, 350 to 2000 ppm by mass, 400 to 2000 ppm by mass, 10 to 1000 ppm by mass, 30 to 1000 ppm by mass, more than 30 ppm by mass and 1000 ppm by mass or less, 50 to 1000 ppm by mass, 100 to 1000 ppm by mass, 150 to 1000 ppm by mass, 200 to 1000 ppm by mass, 250 to 1000 ppm by mass, 300 to 1000 ppm by mass, 350 to 1000 ppm by mass, 400 to 1000 ppm by mass, 10 to 500 ppm by mass, 30 to 500 ppm by mass, more than 30 ppm by mass and 500 ppm by mass or less, 50 to 500 ppm by mass, 100 to 500 ppm by mass, 150 to 500 ppm by mass, 200 to 500 ppm by mass, 250 to 500 ppm by mass, 300 to 500 ppm by mass, 350 to 500 ppm by mass, 400 to 500 ppm by mass, more than 0 ppm by mass and 5000 ppm by mass or less, more than 0 ppm by mass and less than 3000 ppm by mass, more than 0 ppm by mass and 2500 ppm by mass or less, more than 0 ppm by mass and 2000 ppm by mass or less, more than 0 ppm by mass and 1500 ppm by mass or less, more than 0 ppm by mass and 1000 ppm by mass or less, or more than 0 ppm by mass and 500 ppm by mass or less. By adding a predetermined amount of amino acid in such an amount and the above-described gluconic acid or gluconic acid compound to a beverage containing erythritol, it is possible to improve at least one flavor characteristic selected from the group consisting of a miscellaneous taste, a low body feel, and lingering sweetness derived from erythritol. The content of amino acid can be measured by an amino acid automatic analysis method or high-performance liquid chromatography. When the blending amount of the amino acid blended in the beverage is known, a value calculated from the blending amount may be used. The amino acid used in the present invention may be an amino acid purified as an amino acid preparation or may be an amino acid derived from a raw material contained in a raw material such as fruit juice. Therefore, the amount of amino acid contained in the beverage of the present invention is the sum of the amount derived from the raw material and the amount added from the outside.

In some aspects of the present invention, the content of the one or more amino acids and the content of gluconic acid or a gluconic acid compound in terms of gluconic acid may be within predetermined ranges. For example, the content of the one or more amino acids may be more than 30 ppm by mass and 5000 ppm by mass or less, and the content of gluconic acid or a gluconic acid compound in terms of gluconic acid may be from 30 to 16000 ppm by mass. Alternatively, the content of the one or more amino acids may be more than 0 ppm by mass and 5000 ppm by mass or less, and the content of gluconic acid or a gluconic acid compound in terms of gluconic acid may be 170 to 16000 ppm by mass. Alternatively, the content of the one or more amino acids may be more than 0 ppm by mass and less than 3000 ppm by mass, and the content of gluconic acid or a gluconic acid compound in terms of gluconic acid may be 170 to 20000 ppm by mass. Alternatively, the content of the one or more amino acids may be 40 to 4000 ppm by mass, and the content of gluconic acid or a gluconic acid compound in terms of gluconic acid may be 50 to 10000 ppm by mass. The content is preferably in such a range because the miscellaneous taste of erythritol can be effectively suppressed. Alternatively, the relationship between the content of gluconic acid and the content of amino acid may satisfy the formula of "3.7 ≤ log (ppm by mass of gluconic acid) + log (ppm by mass of amino acid) ≤ 7.6". This formula is a mathematical expression of the range in which the effect was confirmed to be excellent in Examples, and the miscellaneous taste of erythritol is effectively suppressed also when the relationship between the contents of gluconic acid and amino acid satisfies the formula.

The beverage according to some aspects of the present invention may further contain amino acids other than the above, such as ornithine and taurine.

### High-Intensity Sweetener

The beverage of some aspects of the present invention further contains a high-intensity sweetener. As used herein, the term "high-intensity sweetener" refers to a compound that has a stronger sweetness than that of sucrose, and may be a naturally occurring compound, a synthetic compound, or a combination of naturally occurring and synthetic compounds. The high-intensity sweetener exhibits a sweetness being 5 times or more, 10 times or more, 50 times or more, 100 times or more, 500 times or more, 1000 times or more, 5000 times or more, 10000 times or more, 50000 times or more, or 100000 times or more that of sucrose in the same amount as sucrose. The steviol glycoside described above is also one of high-intensity sweeteners.

In some aspects of the present invention, the high-intensity sweetener contains at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviolmonoside, steviolbioside, stevioside, luo han guo extract, mogroside V, thaumatin, brazzein, licorice extract, saccharin, neotame, aspartame, acesulfame K, sucralose, and a combination thereof. A preferred embodiment of the beverage of the present invention contains at least one selected from the group consisting of aspartame, acesulfame K, sucralose, and a combination thereof.

### Low-Intensity Sweetener

The beverage of some embodiments of the present invention further contains a low-intensity sweetener other than erythritol. As used herein, the low-intensity sweetener means a sweetener having a sweetness degree equivalent to or lower than that of sucrose. For example, the low-intensity sweetener exhibits a sweetness being 0.1 times or more and less than 5 times, less than 3 times, less than 2 times, less than 1.5 times, less than 1.0 times, less than 0.8 times, less than 0.7 times, less than 0.6 times, less than 0.5 times, or less than 0.4 times that of sucrose in the same amount as sucrose. Examples of the low-intensity sweetener that can be used in the present invention include a sweetener selected from glucose, sucrose, xylitol, fructose, maltose, oligosaccharides, fructose-glucose liquid sugar (HFCS), lactose, psicose, allose, tagatose, xylose, ribose, and a combination thereof. The beverage in a preferred aspect of the present invention contains a sweetener selected from xylitol, maltose, oligosaccharides, psicose, allose, tagatose, xylose, ribose and a combination thereof.

The content of the sweetener is not particularly limited, but the sweetness intensity of the beverage is preferably 10 or more (e.g., from 10 to 25) in terms of sucrose equivalent value (SEV). A sucrose equivalent value of 1 is the sweetness intensity exhibited by sucrose per unit concentration Brix1. As used herein, Brix1 means that 1 g of sucrose is dissolved in 100 g of an aqueous sucrose solution (sucrose concentration: 1 w/w%). In the present specification, the sucrose equivalent value of a beverage can be obtained by summing numerical values obtained by multiplying the concentration of a sweetener contained in the beverage (w/v% (which may be regarded as w/w% in the case of a beverage)) by the sweetness of the sweetener. For example, in the present specification, when the sweetness of sucrose is 1, the sweetness of rebaudioside D is about 225 times, the sweetness of rebaudioside M is about 230 times, the sweetness of rebaudioside A is from 200 to 300 times (center value: 250), the sweetness of luo han guo extract is from about 110 to 150 times (center value: 130 times), the sweetness of mogroside V is from about 240 to 300 times (center value: 270 times), the sweetness of thaumatin is about 2000 times, the sweetness of acesulfame potassium is about 200 times, the sweetness of sucralose is about 600 times, and the sweetness of aspartame is about 200 times. In the present specification, for example, when the sweetness of sucrose is 1, glucose has a sweetness of about 0.6 to about 0.7, xylitol has a sweetness of about 1, erythritol has a sweetness of about 0.75 to about 0.85, fructose has a sweetness of about 1.3 to about 1.7, maltose has a sweetness of about 0.4, fructooligosaccharide has a sweetness of about 0.6, maltooligosaccharide has a sweetness of about 0.3, isomaltooligosaccharide has a sweetness of about 0.4 to about 0.5, galactooligosaccharide has a sweetness of about 0.7, fructose-glucose liquid sugar has a sweetness of about 0.75, lactose has a sweetness of about 0.2 to about 0.3, psicose has a sweetness of about 0.7, allose has a sweetness of about 0.8, tagatose has a sweetness of about 0.9, xylose has a sweetness of about 0.6 to 0.7, and ribose has a sweetness of about 0.6. Among relative ratios of the sweetness of various sweeteners to the sweetness of sucrose of 1, a relative ratio that is not described in the present specification can be determined from a known sugar sweetness conversion table or the like. Here, since the sweetness of aspartame is about 200 times the sweetness of sucrose, when a beverage containing 0.005 mass% (50 ppm by mass) of aspartame does not contain any other sweetener, the sweetness of the beverage corresponds to a sucrose equivalent value of 1. When the beverage contains other sweeteners (high-intensity sweeteners and low-intensity sweeteners), the sweetness intensity of the beverage is expressed as the sum of sucrose equivalent values of the sweetness intensities provided by the respective sweeteners.

The beverage according to some aspects of the present invention may contain a high-intensity sweetener in an amount of 5 to 500 ppm by mass, 5 to 450 ppm by mass, 5 to 400 ppm by mass, 5 to 350 ppm by mass, 10 to 500 ppm by mass, 10 to 450 ppm by mass, 10 to 400 ppm by mass, 10 to 350 ppm by mass, 50 to 500 ppm by mass, 50 to 450 ppm by mass, 50 to 400 ppm by mass, 50 to 350 ppm by mass, 100 to 500 ppm by mass, 100 to 450 ppm by mass, 100 to 400 ppm by mass, 100 to 350 ppm by mass, 150 to 500 ppm by mass, 150 to 450 ppm by mass, 150 to 400 ppm by mass, 150 to 350 ppm by mass, 200 to 500 ppm by mass, 200 to 450 ppm by mass, 200 to 400 ppm by mass, 200 to 350 ppm by mass, 250 to 500 ppm by mass, 250 to 450 ppm by mass, 250 to 400 ppm by mass, or 250 to 350 ppm by mass. The content of the high-intensity sweetener can be measured by a high-performance liquid chromatography (HPLC). Alternatively, in a case where the blending amounts thereof are known, a value calculated from the blending amount may be used.

The beverage according to some aspects of the present invention may contain a low-intensity sweetener other than erythritol in an amount of 10 to 3000 ppm by mass, 10 to 2500 ppm by mass, 10 to 2000 ppm by mass, 10 to 1500 ppm by mass, 10 to 1000 ppm by mass, 100 to 3000 ppm by mass, 100 to 2500 ppm by mass, 100 to 2000 ppm by mass, 100 to 1500 ppm by mass, 100 to 1000 ppm by mass, 500 to 3000 ppm by mass, 500 to 2500 ppm by mass, 500 to 2000 ppm by mass, 500 to 1500 ppm by mass, or 500 to 1000 ppm by mass. The content of the low-intensity sweetener can be measured by a high-performance liquid chromatography (HPLC). Alternatively, in a case where the blending amounts thereof are known, a value calculated from the blending amount may be used.

The sweetness intensity of the beverage according to some aspects of the present invention preferably has a sucrose equivalent value of 25 or less, more preferably 20 or less. The sweetness intensity of the beverage according to some further preferred aspects of the present invention may have a sucrose equivalent value of 6 to 25, 8 to 25, 10 to 25, 12 to 25, 14 to 25, 16 to 25, 6 to 22, 8 to 22, 10 to 22, 12 to 22, 14 to 22, 16 to 22, 6 to 20, 8 to 20, 10 to 20, 12 to 20, 14 to 20, 16 to 20, 6 to 18, 8 to 18, 10 to 18, 12 to 18, 14 to 18, 6 to 16, 8 to 16, 10 to 16, or 12 to 16.

### Acidulant

The beverage according to some aspects of the present invention further contains an acidulant. The acidulant is not particularly limited as long as the acidulant can impart sourness to the beverage, and examples thereof include ascorbic acid, phosphoric acid, citric acid, gluconic acid, tartaric acid, lactic acid, malic acid, phytic acid, acetic acid, succinic acid, glucono-delta-lactone, and a salt thereof. Examples of the salt include sodium citrate (monosodium citrate, disodium citrate, or trisodium citrate) and sodium ascorbate. Among these sour substances, ascorbic acid, phosphoric acid, citric acid, gluconic acid, tartaric acid, lactic acid, malic acid, phytic acid, acetic acid, succinic acid, or a salt thereof is preferred, and citric acid or a salt thereof is more preferred.

### Other Optional Components

The beverage according to some aspects of the present invention contains caffeine. Caffeine is generally known to be contained in some food and/or beverage such as coffee, but the caffeine used in the present invention may be purified from food and/or beverage rich in caffeine or may be chemically synthesized or biosynthesized. In addition, since a caffeine preparation is generally commercially available, such a commercially available product may be used. Alternatively, caffeine-containing raw materials such as cola extract and coffee bean extract may be used.

The beverage according to some aspects of the present invention contains water. The water is not particularly limited, and any water can be used as long as it does not adversely affect the flavor characteristic, and examples of the water include tap water, ion-exchanged water, softened water, distilled water, carbonated water, reverse osmosis water (RO water), carbon-treated water, purified water, and demineralized water.

The beverage according to some aspects of the present invention may contain, in addition to the components described above, a component that can be added to ordinary beverages as long as the effects of the present invention are not impaired. Examples of such a component include perfumes, coloring matter, antioxidants, emulsifiers, seasonings, extracts, pH adjusters, and quality stabilizers.

### Properties

The pH of the beverage in some aspects of the present invention is preferably from 2.5 to 5 and may be from 2.5 to 4.8, from 2.7 to 4.8, from 3.0 to 4.8, from 3.2 to 4.8, from 3.4 to 4.8, from 2.5 to 4.6, from 2.7 to 4.6, from 3.0 to 4.6, from 3.2 to 4.6, from 3.4 to 4.6, from 2.5 to 4.4, from 2.7 to 4.4, from 3.0 to 4.4, from 3.2 to 4.4, from 3.4 to 4.4, from 2.5 to 4.2, from 2.7 to 4.2, from 3.0 to 4.2, from 3.2 to 4.2, from 3.4 to 4.2, from 2.5 to 4.0, from 2.7 to 4.0, from 3.0 to 4.0, from 3.2 to 4.0, from 3.4 to 4.0, from 2.5 to 3.8, from 2.7 to 3.8, from 3.0 to 3.8, from 3.2 to 3.8, or from 3.4 to 3.8. Adjusting the pH to this range can reduce propagation of microorganisms and maintain the taste quality well.

The energy of the beverage according to some aspects of the present invention can be, depending on an embodiment, 100 kcal/100 mL or less, from 0 to 100 kcal/100 mL, from 0 to 90 kcal/100 mL, from 0 to 80 kcal/100 mL, from 0 to 70 kcal/100 mL, from 0 to 60 kcal/100 mL, from 0 to 50 kcal/100 mL, from 0 to 40 kcal/100 mL, 30 kcal/100 mL or less, from 0 to 30 kcal/100 mL, from 0 to 20 kcal/100 mL, from 0 to 15 kcal/100 mL, from 0 to 10 kcal/100 mL, from 0 to 5 kcal/100 mL, from 5 to 100 kcal/100 mL, from 5 to 90 kcal/100 mL, from 5 to 80 kcal/100 mL, from 5 to 70 kcal/100 mL, from 5 to 60 kcal/100 mL, from 5 to 50 kcal/100 mL, from 5 to 40 kcal/100 mL, from 5 to 30 kcal/100 mL, from 5 to 20 kcal/100 mL, from 5 to 15 kcal/100 mL, from 5 to 10 kcal/100 mL, from 10 to 100 kcal/100 mL, from 10 to 90 kcal/100 mL, from 10 to 80 kcal/100 mL, from 10 to 70 kcal/100 mL, from 10 to 60 kcal/100 mL, from 10 to 50 kcal/100 mL, from 10 to 40 kcal/100 mL, from 10 to 30 kcal/100 mL, from 10 to 20 kcal/100 mL, from 10 to 15 kcal/100 mL, from 20 to 100 kcal/100 mL, from 20 to 90 kcal/100 mL, from 20 to 80 kcal/100 mL, from 20 to 70 kcal/100 mL, from 20 to 60 kcal/100 mL, from 20 to 50 kcal/100 mL, from 20 to 40 kcal/100 mL, or from 20 to 30 kcal/100 mL. The energy of the beverage according to a preferred aspect of the present invention is 30 kcal/100 mL or less, more preferably from 5 to 30 kcal/100 mL, even more preferably from 5 to 15 kcal/100 mL. The energy of the sweet substance is known, or can be determined by measuring the content with HPLC or the like and multiplying it by an energy conversion factor, or by measuring physical combustion heat by using a calorimeter (e.g., a bomb calorimeter or the like) and correcting the value with a digestibility coefficient, an amount of heat excreted, or the like.

### Container and Sterilization

The form for the beverage in some aspects of the present invention is not limited and may be, for example, a form for a packaged beverage in which the beverage is enclosed and packaged in a container, such as a can, a bottle, a PET bottle, a pouch, a paper pack, and a plastic container. In the case of heat-sterilizing the oral liquid composition after packaging, the type of heat sterilization is not particularly limited, and the packaged oral liquid composition can be heat-sterilized using an ordinary technique, such as, for example, overturning sterilization, UHT sterilization, and retort sterilization. The temperature of the heat sterilization process is not particularly limited and is, for example, from 65 to 130°C and preferably from 80 to 120°C for 1 to 40 minutes. However, as long as a sterilization value equivalent to that in the above-described conditions is obtained, a sterilization at an appropriate temperature for several seconds, for example, from 5 to 30 seconds, is also acceptable.

### 2. Method for producing beverage

The present invention provides, as one aspect, a method for producing a beverage (hereinafter, also referred to as "the method for producing a beverage of the present invention") described in "1. Beverage". The production method of an aspect of the present invention is not particularly limited as long as a beverage can be obtained by blending the above components.

Examples of the production method according to an aspect of the present invention include the method as follows. First, erythritol, gluconic acid or a gluconic acid compound, and one or more predetermined amino acids are weighed in predetermined amounts and added to water or a beverage base, whereby the beverage can be produced. These components may be added simultaneously or separately or may be mixed to prepare a premix before addition and then added.

In the production method according to an aspect of the present invention, other optional components and the like can be appropriately added. The optional components may be added simultaneously or separately with the erythritol, gluconic acid or gluconic acid compound, and one or more predetermined amino acids.

In the production method according to an aspect of the present invention, the description in the item "1. Beverage" above applies to "beverage", "erythritol", "gluconic acid or gluconic acid compound", "sodium", "amino acid", "high-intensity sweetener", "low-intensity sweetener", "acidulant", "other optional component", "characteristic", and "container and sterilization", and the numerical values described in the items of the beverage apply as they are.

### 3. Method for improving taste quality of beverage

The present invention provides, as one aspect, a method for improving taste quality of a beverage (hereinafter, also referred to as "the taste quality improvement method of the present invention"). An aspect of the present invention provides a method for improving taste quality of a beverage, the method including: adding gluconic acid or a gluconic acid compound; and one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine to a beverage containing erythritol.

A taste quality improvement method according to some aspects of the present invention enables the improvement of at least one flavor characteristic selected from the group consisting of a miscellaneous taste, low body feel, and lingering sweetness derived from erythritol in a beverage containing erythritol. According to Examples described below, the addition of gluconic acid or a gluconic acid compound and one or more predetermined amino acids to a beverage containing erythritol produced an effect, and such an effect was highly unexpected.

In the method of some aspects of the present invention, the amount of gluconic acid or a gluconic acid compound added to the beverage is from 30 to 20000 ppm by mass in terms of gluconic acid based on the mass of the entire beverage. The addition amount in terms of gluconic acid may be from 30 to 17000 ppm by mass, from 30 to 16000 ppm by mass, from 30 to 15000 ppm by mass, from 30 to 10000 ppm by mass, from 30 to 8000 ppm by mass, from 30 to 6000 ppm by mass, from 30 to 4000 ppm by mass, from 30 to 2000 ppm by mass, from 50 to 20000 ppm by mass, from 50 to 17000 ppm by mass, from 50 to 15000 ppm by mass, from 50 to 10000 ppm by mass, from 50 to 8000 ppm by mass, from 50 to 6000 ppm by mass, from 50 to 4000 ppm by mass, from 50 to 2000 ppm by mass, from 100 to 20000 ppm by mass, from 100 to 17000 ppm by mass, from 100 to 15000 ppm by mass, from 100 to 10000 ppm by mass, from 100 to 8000 ppm by mass, from 100 to 6000 ppm by mass, from 100 to 4000 ppm by mass, from 100 to 2000 ppm by mass, from 150 to 20000 ppm by mass, from 150 to 17000 ppm by mass, from 150 to 15000 ppm by mass, from 150 to 10000 ppm by mass, from 150 to 8000 ppm by mass, from 150 to 6000 ppm by mass, from 150 to 4000 ppm by mass, from 150 to 2000 ppm by mass, from 170 to 20000 ppm by mass, from 170 to 16000 ppm by mass, from 170 to 17000 ppm by mass, from 170 to 15000 ppm by mass, from 170 to 10000 ppm by mass, from 170 to 8000 ppm by mass, from 170 to 6000 ppm by mass, from 170 to 4000 ppm by mass, from 170 to 2000 ppm by mass, from 200 to 20000 ppm by mass, from 200 to 17000 ppm by mass, from 200 to 15000 ppm by mass, from 200 to 10000 ppm by mass, from 200 to 8000 ppm by mass, from 200 to 6000 ppm by mass, from 200 to 4000 ppm by mass, from 200 to 2000 ppm by mass, from 500 to 20000 ppm by mass, from 500 to 17000 ppm by mass, from 500 to 15000 ppm by mass, from 500 to 10000 ppm by mass, from 500 to 8000 ppm by mass, from 500 to 6000 ppm by mass, from 500 to 4000 ppm by mass, from 500 to 2000 ppm by mass, from 1000 to 20000 ppm by mass, from 1000 to 17000 ppm by mass, from 1000 to 15000 ppm by mass, from 1000 to 10000 ppm by mass, from 1000 to 8000 ppm by mass, from 1000 to 6000 ppm by mass, from 1000 to 4000 ppm by mass, from 1000 to 2000 ppm by mass, from 1500 to 20000 ppm by mass, from 1500 to 17000 ppm by mass, from 1500 to 15000 ppm by mass, from 1500 to 10000 ppm by mass, from 1500 to 8000 ppm by mass, from 1500 to 6000 ppm by mass, from 1500 to 4000 ppm by mass, or from 1500 to 2000 ppm by mass.

In the method in some aspects of the present invention, the amount of amino acid added to the beverage may be more than 0 ppm by mass and 5000 ppm by mass or less based on the mass of the entire beverage. The range of the amount of amino acid added may be, depending on the embodiment, from 10 to 5000 ppm by mass, from 30 to 5000 ppm by mass, more than 30 ppm by mass and 5000 ppm by mass or less, from 50 to 5000 ppm by mass, from 100 to 5000 ppm by mass, from 150 to 5000 ppm by mass, from 200 to 5000 ppm by mass, from 250 to 5000 ppm by mass, from 300 to 5000 ppm by mass, from 350 to 5000 ppm by mass, from 400 to 5000 ppm by mass, from 10 to 4000 ppm by mass, from 30 to 4000 ppm by mass, more than 30 ppm by mass and 4000 ppm by mass or less, from 40 to 4000 ppm by mass, from 50 to 4000 ppm by mass, from 100 to 4000 ppm by mass, from 150 to 4000 ppm by mass, from 200 to 4000 ppm by mass, from 250 to 4000 ppm by mass, from 300 to 4000 ppm by mass, from 350 to 4000 ppm by mass, from 400 to 4000 ppm by mass, from 10 to 3000 ppm by mass, from 30 to 3000 ppm by mass, more than 30 ppm by mass and 3000 ppm by mass or less, from 50 to 3000 ppm by mass, from 100 to 3000 ppm by mass, from 150 to 3000 ppm by mass, from 200 to 3000 ppm by mass, from 250 to 3000 ppm by mass, from 300 to 3000 ppm by mass, from 350 to 3000 ppm by mass, from 400 to 3000 ppm by mass, from 10 to 2000 ppm by mass, from 30 to 2000 ppm by mass, more than 30 ppm by mass and 2000 ppm by mass or less, from 50 to 2000 ppm by mass, from 100 to 2000 ppm by mass, from 150 to 2000 ppm by mass, from 200 to 2000 ppm by mass, from 250 to 2000 ppm by mass, from 300 to 2000 ppm by mass, from 350 to 2000 ppm by mass, from 400 to 2000 ppm by mass, from 10 to 1000 ppm by mass, from 30 to 1000 ppm by mass, more than 30 ppm by mass and 1000 ppm by mass or less, from 50 to 1000 ppm by mass, from 100 to 1000 ppm by mass, from 150 to 1000 ppm by mass, from 200 to 1000 ppm by mass, from 250 to 1000 ppm by mass, from 300 to 1000 ppm by mass, from 350 to 1000 ppm by mass, from 400 to 1000 ppm by mass, from 10 to 500 ppm by mass, from 30 to 500 ppm by mass, more than 30 ppm by mass and 500 ppm by mass or less, from 50 to 500 ppm by mass, from 100 to 500 ppm by mass, from 150 to 500 ppm by mass, from 200 to 500 ppm by mass, from 250 to 500 ppm by mass, from 300 to 500 ppm by mass, from 350 to 500 ppm by mass, from 400 to 500 ppm by mass, more than 0 ppm by mass and 5000 ppm by mass or less, more than 0 ppm by mass and less than 3000 ppm by mass, more than 0 ppm by mass and 2500 ppm by mass or less, more than 0 ppm by mass and 2000 ppm by mass or less, more than 0 ppm by mass and 1500 ppm by mass or less, more than 0 ppm by mass and 1000 ppm by mass or less, or more than 0 ppm by mass and 500 ppm by mass or less.

In the production method according to an aspect of the present invention, the description in the item "1. Beverage" above applies to "beverage", "erythritol", "gluconic acid or gluconic acid compound ", "sodium", "amino acid", "high-intensity sweetener", "low-intensity sweetener", "acidulant", "other optional component", "characteristic", and "container and sterilization", and the numerical values described in the items of the beverage apply as they are.

### Exemplary Aspects of Present Invention

Exemplary aspects of the present invention will be described below, but the present invention is not limited to the following aspects.

An aspect of the present invention provides a beverage containing: 5000 to 10000 ppm by mass of erythritol;
30 to 16000 ppm by mass of gluconic acid or a gluconic acid compound in terms of gluconic acid; and
more than 30 ppm by mass and 5000 ppm by mass or less of one or more amino acids selected from the group consisting of glycine, alanine, valine, isoleucine, leucine, serine, threonine, glutamine, asparagine, arginine, lysine, and histidine, preferably alanine and glycine.

An aspect of the present invention provides a beverage containing: 5000 to 10000 ppm by mass of erythritol;
170 to 16000 ppm by mass of gluconic acid or a gluconic acid compound in terms of gluconic acid; and
more than 0 ppm by mass and 5000 ppm by mass or less of one or more amino acids selected from the group consisting of glycine, alanine, valine, isoleucine, leucine, serine, threonine, glutamine, asparagine, arginine, lysine, and histidine, preferably alanine and glycine.

An aspect of the present invention provides a beverage containing: 5000 to 10000 ppm by mass of erythritol;
170 to 20000 ppm by mass of gluconic acid or a gluconic acid compound in terms of gluconic acid; and
more than 0 ppm by mass and less than 3000 ppm by mass of one or more amino acids selected from the group consisting of glycine, alanine, valine, isoleucine, leucine, serine, threonine, glutamine, asparagine, arginine, lysine, and histidine, preferably alanine and glycine.

An aspect of the present invention provides a beverage containing: 5000 to 10000 ppm by mass of erythritol;
50 to 10000 ppm by mass of gluconic acid or a gluconic acid compound in terms of gluconic acid; and
40 to 4000 ppm by mass of one or more amino acids selected from the group consisting of glycine, alanine, valine, isoleucine, leucine, serine, threonine, glutamine, asparagine, arginine, lysine, and histidine, preferably alanine and glycine.

An aspect of the present invention provides a beverage containing: 5000 to 10000 ppm by mass of erythritol;
50 to 10000 ppm by mass of gluconic acid or sodium gluconate in terms of gluconic acid;
40 to 4000 ppm by mass of one or more amino acids selected from the group consisting of glycine, alanine, valine, isoleucine, leucine, serine, threonine, glutamine, asparagine, arginine, lysine, and histidine, preferably alanine and glycine; and
600 to 1800 ppm by mass sodium.

In the present specification, the wording "about" means that the subject is present in a range of ±25%, ±10%, ±5%, ±3%, ±2%, or ±1% of the numerical value following "about". For example, "about 10" means a range of 7.5 to 12.5. In addition, in the present specification, wt.% can be equated with mass%.

### Examples

Hereinafter, the present invention will be specifically described by illustrating examples, but the present invention is not limited to the following examples.

### [Example A] Evaluation of Beverage

### Preparation of Sample

Artificial sweeteners (sucralose and acesulfame potassium), erythritol, amino acids (DL-alanine and L-glycine), sodium gluconate, and water were mixed in blending amounts as listed in Table 1, and the mixture was filled in a glass bottle container to prepare a sample solution. The raw materials used are as follows: sucralose (Tate & Lyle, SPLENDA (trade name)), acesulfame potassium (Celanese Corporation, Sunett (trade name)), erythritol (KOTOBUKI Bussan Co., Ltd.), DL-alanine (Margo Corporation, DL-alanine), L-glycine (Happo Shokusan Co. Ltd.), anhydrous sodium gluconate (Helshas A, Fuso Chemical Co., Ltd.), and water (distilled water). After preparation, each sample was sterilized at 80°C for 10 minutes.

**[Table 1]**

| Table 1: Composition of beverage samples | | | | | | | | | | | | | | |
|---|---|---|---|---|---|---|---|---|---|---|---|---|---|---|
| Sample No. | Unit | A1 | A2 | A3 | A4 | A5 | A6 | A7 | A8 | A9 | A10 | A11 | A12 | A13 |
| Sucralose | g | 0.120 | 0.120 | 0.120 | 0.120 | 0.120 | 0.120 | 0.120 | 0.120 | 0.120 | 0.120 | 0.120 | 0.120 | 0.120 |
| Acelsufame K | g | 0.230 | 0.230 | 0.230 | 0.230 | 0.230 | 0.230 | 0.230 | 0.230 | 0.230 | 0.230 | 0.230 | 0.230 | 0.230 |
| Erythritol | g | - | 7.00 | 7.00 | 7.00 | 7.00 | 7.00 | 7.00 | 7.00 | 7.00 | 7.00 | 7.00 | 7.00 | 7.00 |
| DL-alanine | g | - | - | - | 0.20 | 0.02 | 0.20 | 2.00 | 2.00 | 0.20 | 2.00 | 0.02 | 0.20 | 0.02 |
| | ppm | - | - | - | 200 | 20 | 200 | 2000 | 2000 | 200 | 2000 | 20 | 200 | 20 |
| L-glycine | g | - | - | - | 0.10 | 0.01 | 0.10 | 1.00 | 1.00 | 0.10 | 1.00 | 0.01 | 0.10 | 0.01 |
| | ppm | - | - | - | 100 | 10 | 100 | 1000 | 1000 | 100 | 1000 | 10 | 100 | 10 |
| Sodium gluconate | g | - | - | 1.80 | - | 0.18 | 1.80 | 18.00 | 0.18 | 0.18 | 1.80 | 1.80 | 18.00 | 18.00 |
| Water | g | 999.65 | 992.65 | 990.85 | 992.35 | 992.44 | 990.55 | 971.65 | 989.50 | 992.20 | 987.90 | 990.80 | 974.40 | 974.60 |
| Total | g | 1000 | 1000 | 1000 | 1000 | 1000 | 1000 | 1000 | 1000 | 1000 | 1000 | 1000 | 1000 | 1000 |
| Gluconic acid-equivalent amount | ppm | - | - | 1619 | - | 161.9 | 1619 | 16186 | 161.9 | 161.9 | 1619 | 1619 | 16186 | 16186 |
| Na content | ppm | - | - | 190 | - | 19.0 | 190 | 1898 | 19.0 | 19.0 | 190 | 190 | 1898 | 1898 |

| | | | | | | | | | | | | | | |
|---|---|---|---|---|---|---|---|---|---|---|---|---|---|---|
| 1) In the table, "-" means that the corresponding raw material was not added. 2) The gluconic acid-equivalent amount and the Na content were calculated from the amount of sodium gluconate added. | | | | | | | | | | | | | | |

### Sensory Evaluation Item 1: Evaluation of Miscellaneous Taste

### Evaluation Method

For the samples prepared as described above, 3 to 7 trained expert panelists evaluated "miscellaneous taste", where the control (Example A1) was assigned a score of 0 and the sample (Example A2), in which erythritol was added to the control, was assigned a score of - 10, and each sample was scored within a range of 0 ± 10 points accordingly. Therefore, 0 points correspond to a miscellaneous taste of the control itself, and 10 points correspond to a level at which there is no (no feeling of) miscellaneous taste. The average value of the resulting scores is listed in Table 2. The evaluation criteria were pre-matched between panelists. As used herein, the term "miscellaneous taste" means a peculiar miscellaneous taste perceived when a beverage containing erythritol is drunk. The miscellaneous taste was evaluated through swallowing of the samples.

### Sensory Evaluation Item 2: Evaluation of Body Feel

### Evaluation Method

For the samples prepared as described above, 3 to 7 trained expert panelists evaluated "body feel", where the control (Example A1) was assigned a score of 0, with -10 points representing a level at which no body feel was perceived, and +10 points representing the strongest possible body feel, and each sample was scored within a range of 0 ± 10 points accordingly. The average values are shown in Table 2. The evaluation criteria were pre-matched between panelists. As used herein, the "body feel" means a thickness of the beverage upon drinking, and the higher the score, the less the body feel from the sugar-containing beverage is reduced. The body feel was evaluated through swallowing of the samples.

### Sensory Evaluation Item 3: Evaluation of Lingering Sweetness

### Evaluation Method

For the samples prepared as described above, 3 to 7 trained expert panelists evaluated "lingering sweetness", where the control (Example A1) was assigned a score of 0, with +10 points representing a level at which no lingering sweetness was perceived, and -10 points representing the strongest possible lingering sweetness, and each sample was scored within a range of 0 ± 10 points accordingly. The average values are shown in Table 2. The evaluation criteria were pre-matched between panelists. As used herein, the term "lingering sweetness" means a sweet sensation remaining in the mouth, which is perceived when a beverage containing an artificial sweetener or a non-caloric sweetener is drunk. The lingering sweetness was evaluated through swallowing of the samples.

The results of the sensory evaluation are listed in Table 2.

**[Table 2]**

| Table 2: Sensory evaluation result | | | | | | | |
|---|---|---|---|---|---|---|---|
| Sample | Composition (ppm) | | | | Miscellaneous taste | Body feel | Lingering sweetness |
| | Erythritol | Amino acid | Gluconic acid | Sodium | | | |
| A1 | - | - | - | - | 0 | 0 | 0 |
| A2 | 7000 | - | - | - | -10 | 0.6 | -1.8 |
| A3 | 7000 | - | 1619 | 190 | -2.5 | 0.8 | -0.1 |
| A4 | 7000 | 300 | - | - | -3.5 | 0.3 | 0.3 |
| A5 | 7000 | 30 | 161.9 | 19.0 | -2.6 | 1.9 | -0.2 |
| A6 | 7000 | 300 | 1619 | 190 | 0.8 | 2.2 | 1.5 |
| A7 | 7000 | 3000 | 16186 | 1898 | -2.4 | 1.5 | 0.6 |
| A8 | 7000 | 3000 | 161.9 | 19.0 | -0.1 | 1.6 | 0.8 |
| A9 | 7000 | 300 | 161.9 | 19.0 | 0.7 | 1.6 | 0.9 |
| A10 | 7000 | 3000 | 1619 | 190 | 0.2 | 2.2 | 1.2 |
| A11 | 7000 | 30 | 1619 | 190 | 0.9 | 1.6 | 0.6 |
| A12 | 7000 | 300 | 16186 | 1898 | -0.9 | 2.7 | 1.2 |
| A13 | 7000 | 30 | 16186 | 1898 | -1.4 | 4.0 | 0.0 |

### [Example B] Evaluation of Energy Drink

### Preparation of Sample

In the same manner as in Example A, energy flavor, sodium citrate, glucuronolactone, taurine, citric acid, artificial sweeteners (sucralose and acesulfame potassium), xanthan gum, erythritol, amino acids (DL-alanine and L-glycine), sodium gluconate, carbonated water, and water were mixed in the blending amounts as listed in Table 3, and then the mixture was filled in a glass bottle container to prepare a sample solution. The raw materials used were as follows: flavoring (energy flavor), trisodium citrate dihydrate (Fuso Chemical Co., Ltd.), glucuronolactone, taurine, citric acid (Fuso Chemical Co., Ltd.), sucralose (Tate & Lyle, SPLENDA (trade name)), acesulfame potassium (Celanese Corporation; Sunett (trade name), xanthan gum, erythritol (KOTOBUKI Bussan Co., Ltd.), DL-alanine (Marugo Corporation; DL-alanine), L-glycine (Happo Shokusan Co., Ltd.), anhydrous sodium gluconate (Fuso Chemical Co., Ltd., Helshas A), carbonated water, and water (distilled water). In addition, after each sample was prepared, the sample was sterilized at 80°C for 10 minutes, and carbon dioxide gas was injected so that the gas pressure was from 1.3 to 1.5 kgf/cm² at a liquid temperature of 20°C.

### Sensory evaluation

In the same manner as in Example A, 5 trained expert panelists evaluated sensory evaluation items 1 to 3 on the samples prepared as described above. At that time, Example B1 served as control. The results are listed in Table 3.

**[Table 3]**

| Table 3: Composition of beverage samples and sensory evaluation results | | | | | | |
|---|---|---|---|---|---|---|
| Sample No. | Unit | B1 | B2 | B3 | B4 | B5 |
| Energy flavor | g | 15.0 | 15.0 | 15.0 | 15.0 | 15.0 |
| Sodium citrate | g | 4.30 | 4.30 | 4.30 | 4.30 | 4.30 |
| Glucuronolactone | g | 0.250 | 0.250 | 0.250 | 0.250 | 0.250 |
| Taurine | g | 2.00 | 2.00 | 2.00 | 2.00 | 2.00 |
| Citric acid | g | 6.48 | 6.48 | 6.48 | 6.48 | 6.48 |
| Sucralose | g | 0.120 | 0.120 | 0.120 | 0.120 | 0.120 |
| Acelsufame K | g | 0.230 | 0.230 | 0.230 | 0.230 | 0.230 |
| Xanthan gum | g | 0.110 | 0.110 | 0.110 | 0.110 | 0.110 |
| Erythritol | g | - | 7.00 | 7.00 | 7.00 | 7.00 |
| DL-alanine | g | - | - | - | 0.20 | 0.20 |
| | ppm | - | - | - | 200 | 200 |
| L-glycine | g | - | - | - | 0.10 | 0.10 |
| | ppm | - | - | - | 100 | 100 |
| Sodium gluconate | g | - | - | 1.80 | - | 1.80 |
| Carbonated water | g | 500 | 500 | 500 | 500 | 500 |
| Water | g | 471.51 | 464.51 | 462.71 | 464.21 | 462.41 |
| Total | g | 1000 | 1000 | 1000 | 1000 | 1000 |
| In terms of gluconic acid | ppm | - | - | 1619 | - | 1619 |
| Na content | ppm | 1009 | 1009 | 1199 | 1009 | 1199 |
| Miscellaneous taste | | 0 | -10 | -3.9 | -4.6 | 0.0 |
| Body feel | | 0 | 0.3 | 0.3 | 1.4 | 2.7 |
| Lingering sweetness | | 0 | 0.3 | 0.6 | 1.0 | 3.0 |

| | | | | | | |
|---|---|---|---|---|---|---|
| 1) In the table, "-" means that the corresponding raw material was not added. 2) The gluconic acid-equivalent amount was calculated from the amount of sodium gluconate added. 3) The Na content was calculated from the amounts of sodium citrate and sodium gluconate added. | | | | | | |

## Claims

1. A beverage, comprising:
erythritol;
gluconic acid or a gluconic acid compound; and
one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine.

2. The beverage according to claim 1, comprising one or more amino acids selected from the group consisting of glycine, alanine, valine, isoleucine, leucine, serine, threonine, glutamine, asparagine, arginine, lysine, and histidine.

3. The beverage according to claim 1 or 2, wherein a content of the one or more amino acids is from 10 to 5000 ppm by mass.

4. The beverage according to any one of claims 1 to 3, wherein a content of the erythritol is from 100 to 25000 ppm by mass.

5. The beverage according to any one of claims 1 to 4, wherein a content of the gluconic acid or the gluconic acid compound is, in terms of gluconic acid, from 30 to 20000 ppm by mass.

6. The beverage according to any one of claims 1 to 5, wherein the gluconic acid compound comprises one or more selected from the group consisting of sodium gluconate and potassium gluconate.

7. The beverage according to any one of claims 1 to 6, wherein the beverage comprises from 1 to 2000 ppm by mass of sodium.

8. The beverage according to any one of claims 1 to 7, wherein the beverage comprises from 600 to 1800 ppm by mass of sodium.

9. The beverage according to any one of claims 1 to 8, further comprising a high-intensity sweetener.

10. The beverage according to claim 9, wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviolmonoside, steviolbioside, stevioside, luo han guo extract, mogroside V, thaumatin, brazzein, licorice extract, saccharin, neotame, aspartame, acesulfame K, sucralose, and a combination thereof.

11. The beverage according to any one of claims 1 to 10, wherein the beverage is a carbonated beverage or an energy drink.

12. The beverage according to any one of claims 1 to 11, having an energy of 30 Kcal/100 ml or less.

13. The beverage according to any one of claims 1 to 12, further comprising citric acid.

14. The beverage according to any one of claims 1 to 13, wherein the beverage is a packaged beverage.

15. A method for improving taste quality of a beverage, the method comprising adding, to a beverage containing erythritol: gluconic acid or a gluconic acid compound; and one or more amino acids selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, cystine, and theanine.
